# EUROPEAN PATENT APPLICATION

(11) **EP 4 391 553 A1**
(43) Date of publication of application: **26.06.2024**
(21) Application number: 22880911.7
(22) Date of filing: 06.10.2022
(51) Int. Cl.: H04N 21/238, G06Q 50/10

(54) **VIDEO DISTRIBUTION SYSTEM, SERVER DEVICE, AND PROGRAM**

(30) Priority: 13.10.2021 JP 2021168138
(71) Applicant: Avatarin Inc., Tokyo 103-0022 (JP)
(72) Inventor: FUKABORI, Akira, Tokyo 103-0022 (JP); KAJITANI, Kevin, Tokyo 103-0022 (JP); FERNANDO, Charith Lasantha, Tokyo 103-0022 (JP); KARITA, Ryutaro, Tokyo 103-0022 (JP); TSUTSU, Masahiro, Tokyo 103-0022 (JP); TAKIGUCHI, Satoru, Tokyo 103-0022 (JP)
(74) Representative: D Young & Co LLP
(86) International application number: PCT/JP2022/037470
(87) International publication number: WO 2023/063216

(57) **Abstract**

A real-time video distribution technique that utilizes a robot is provided. An operator remotely operates a robot 30 using an operator terminal 20a. When a management server 10 receives operation information in accordance with the remote operation from the operator terminal 20a, the management server 10 transmits the operation information to the robot 30. The robot 30 and the operator terminal 20a generate video (including audio) by image-capturing an object according to an operation by the operator and transmit the videos to the management server 10. When the management server 10 receives the respective videos from the robot 30 and the operator terminal 20a, the management server 10 live-streams the videos to a viewer terminal 20b.

## Description

### Cross-reference to related applications

**The** present application is based on Japanese Patent Application No. 2021-168138 filed on October 13, 2021, the entire contents of which are incorporated herein by reference.

### Technical Field

**The** present invention relates to a video distribution system, a server apparatus, and a program.

### Background Art

Recently, a video conference system using the Internet has become popular and, a robot (for example, a telepresence robot) is known, with which not only can one engage in face-to-face conversation with other people but also can a remote user manipulate an orientation or a positions of a camera of the robot (refer to Patent Document 1).

Robots are expected to be widely utilized in various fields. For example, by installing a robot at a facility such as an art gallery, a museum, or an aquarium and having a user, who resides at a remote location, remotely operate and use the robot as an alter ego, various articles and the like on display can be appreciated by the user as though the user is actually inside the facility.

### Citation List

### Patent Document

Patent Document 1: Patent Publication JP-A-2019-062308

### Summary

With recent increases in functionality of electronic devices, real-time distribution (so-called live streaming) of video data using a smartphone or the like, which resembles live TV broadcasting, is garnering attention.

Conceivably, applying such live streaming to a robot enables, for example, an operator, who operates the robot in a facility, to acquire video data of the inside of the facility using a camera mounted to the robot and to live-stream the video to viewers. However, techniques that adopt such ideas are yet to be proposed.

The present invention has been made in consideration of the circumstances described above and an object thereof is to provide a real-time video distribution technique that utilizes a robot.

A video distribution system according to an aspect of the present disclosure includes: a first receiving unit which receives a first video acquired by a robot; a second receiving unit which receives operation information of the robot from a terminal of an operator; a third receiving unit which receives a second video acquired by the terminal of the operator; a transmitting unit which transmits the operation information of the robot to the robot; and a distributing unit which distributes the first video and the second video to a terminal of a viewer.

### Advantageous Effects of Invention

According to the present invention, a real-time video distribution technique that utilizes a robot can be provided.

### Brief Description of Drawings

Fig. 1 is a diagram showing a network configuration of a video distribution system according to a present embodiment.
Fig. 2 is a conceptual diagram for describing an outline of the video distribution system.
Fig. 3 is a block diagram showing a functional configuration of an advertising server.
Fig. 4A is a diagram illustrating an operation authority setting screen.
Fig. 4B is an explanatory diagram of a case where an operation authority is granted.
Fig. 5 is a diagram illustrating a screen of a live video.
Fig. 6 is a diagram showing a hardware configuration of a computer mounted to a management server, an operator terminal, and a viewer terminal.
Fig. 7 is a diagram showing a hardware configuration of a computer mounted to a robot.
Fig. 8 is a flowchart showing an example of processing executed by the management server.
Fig. 9 is a diagram illustrating a screen of a superimposed video according to a modification on which a pointer is superimposed.

### Description of Embodiments

Hereinafter, an embodiment of the present invention will be described. Note that the embodiment described below is for illustrative purposes only and is not intended to limit the present invention thereto. In addition, various modifications may be made to the present invention without departing from the scope of the invention. It will thus be appreciated that those skilled in the art will be able to adopt embodiments in which the respective elements described below are replaced by equivalents and that such embodiments will also fall within the scope of the present invention. Furthermore, while an embodiment in which the present invention is realized using an information processing apparatus (or a computer) will be described below as an example in order to facilitate understanding, the present invention is not limited thereto.

### A. Present embodiment

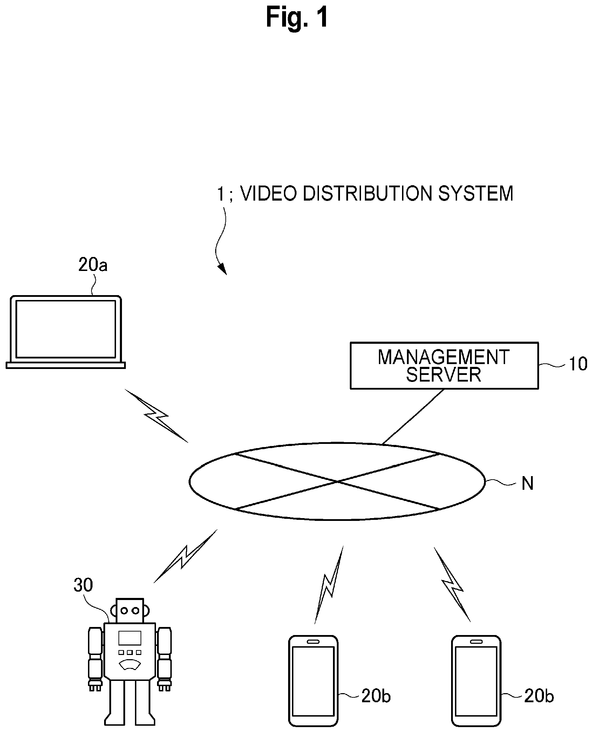

Fig. 1 is a diagram showing a network configuration of a video distribution system 1 according to the present embodiment. The video distribution system 1 includes a plurality of unfixed robots 30, an operator terminal 20a capable of operating each robot 30, a management server 10 which live-streams video data (hereinafter, abbreviated as "video") acquired by the robots 30 or the operator terminal 20a, and a viewer terminal 20b capable of receiving and viewing a live-streamed video. Each robot 30, the operator terminal 20a, the viewer terminal 20b, and the management server 10 are capable of communicating with each other via a communication network N. While one robot 30, one operator terminal 20a, two viewer terminals 20b, and one management server 10 are illustrated in Fig. 1, the numbers of robots 30, operator terminals 20a, viewer terminals 20b, and management servers 10 are respectively optional.

One or a plurality of portions of the communication network N may be a wired network or a wireless network. By way of example and not of limitation, the communication network N may be or may include a combination of two or more of an Ad Hoc Network, an intranet, an extranet, a Virtual Private Network (VPN), a Local Area Network (LAN), a Wireless LAN (WLAN), a Wide Area Network (WAN), a Wireless WAN (WWAN), a Metropolitan Area Network (MAN), a part of the Internet, a part of a Public Switched Telephone Network (PSTN), a mobile phone network, ISDNs (Integrated Service Digital Networks), wireless LANs, LTE (Long Term Evolution), CDMA (Code Division Multiple Access), Near Field Communication such as Bluetooth (registered trademark), and satellite communication.

### < Outline of video distribution system 1 >

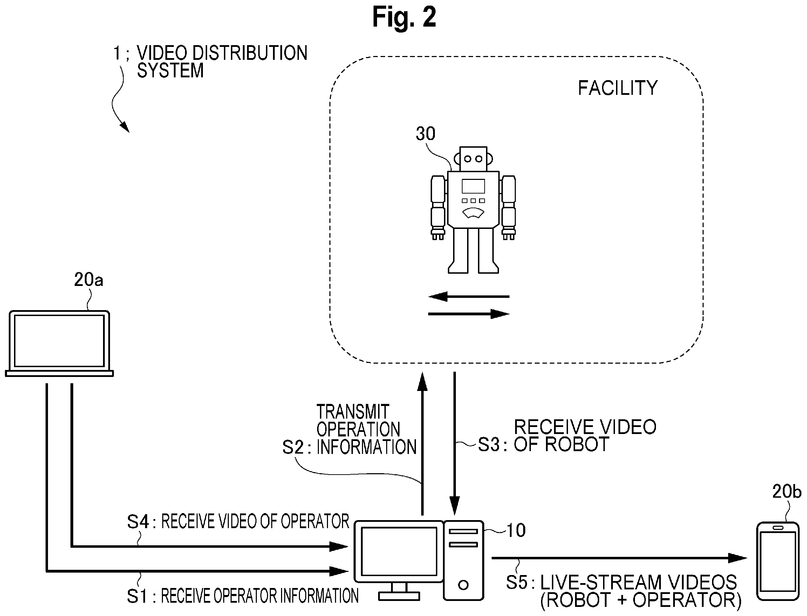

Fig. 2 is a conceptual diagram for describing an outline of the video distribution system 1.

For example, the robot 30 is installed in a facility such as an aquarium. An operator remotely operates the robot 30 using the operator terminal 20a. When the management server 10 receives operation information in accordance with the remote operation from the operator terminal 20a (S1), the management server 10 transmits the operation information to the robot (S2).

The robot 30 and the operator terminal 20a are mounted with a camera and a microphone. The robot 30 and the operator terminal 20a capture an object (for example, fish swimming inside a tank) according to an operation by the operator and generate videos (including audio) and transmit the videos to the management server 10.

As an example, while the robot 30 generates a video (first video) representing a fish swimming inside a tank or the like, the operator terminal 20a generates a video (second video) representing a face of the operator or the like. Note that while a case where video includes audio is assumed hereinafter, video need not include audio. When the management server 10 receives respective videos from the robot 30 and the operator terminal 20a (S3, S4), the management server 10 live-streams the videos to the viewer terminal 20b (S5).

According to the video distribution system 1 described above, an operator to operate a robot inside a facility can use a camera and the like mounted to the robot 30 or the operator terminal 20a to acquire a video of an object as viewed from various angles and live-stream the video to viewers. Hereinafter, configurations of the management server 10, the operator terminal 20a, the viewer terminal 20b, and the robot 30 will be described.

### < Configurations >

The management server 10 is constituted of an information processing apparatus such as a server computer and is equipped with a function of controlling operations of the robot 30, a function of live-streaming videos acquired by the robot 30 and the operator terminal 20a to the viewer terminal 20b, and the like. The management server 10 may be constituted of one information processing apparatus or a plurality of information processing apparatuses as in the cases of cloud computing, edge computing, and the like. Detailed functions of the management server 10 will be described later.

The operator terminal 20a is an information processing apparatus used by the operator to operate the robot 30 and the like. The operator terminal 20a includes an input unit which accepts input of operation information by the operator, a display unit which displays videos and the like acquired by the robot 30 and the like, and a communicating unit which transmits and receives various kinds of data to and from the management server 10 and the robot 30 via the communication network N.

For example, the operator terminal 20a is a general-purpose or dedicated information processing apparatus such as a smartphone, a tablet terminal, a PDA (Personal Digital Assistants), a personal computer, a head-mounted display, or an application-specific operating system. The operator terminal 20a may be constituted of a dedicated information processing apparatus for operating the robot 30. Note that a VR device, a tactile glove, or the like may be used as the operator terminal 20a in order to remotely operate the robot 30.

The viewer terminal 20b is an information processing apparatus which is used by a viewer who views videos live-streamed by the management server 10 and which is capable of viewing videos and the like that are live-streamed by the management server 10. For example, the viewer terminal 20b is a general-purpose or dedicated information processing apparatus such as a smartphone, a tablet terminal, a PDA (Personal Digital Assistants), a personal computer, a head-mounted display, or an application-specific operating system.

The robot 30 is constituted of, for example, a telepresence robot or an avatar robot and may include a moving unit such as wheels. The robot 30 includes an image/audio input unit which includes a camera and a microphone, a drive unit which can be remotely operated by the operator terminal 20a, and a communicating unit which transmits and receives various kinds of data to and from the management server 10 and the operator terminal 20a via the communication network N. The robot 30 is arranged at various locations and, for example, one or a plurality of robots 30 are installed in a facility such as an aquarium. Each of the robots 30 is an unfixed robot, and being "unfixed" includes cases where the robot 30 is a mobile robot which includes a drive unit such as wheels that enables the robot to move and cases where the robot 30 is a wearable robot which can be worn by a person and which includes a drive unit such as a manipulator that enables the robot to operate.

A mobile robot is described in, for example, Patent Document 1. The moving unit of a mobile robot includes those which travel on one wheel, two wheels, or multiple wheels, those which travel on a caterpillar, those which travel on rails, those which move by jumping, those which travel on two legs, four legs, or multiple legs, those which navigate on water or underwater, and those which fly using a propeller or the like. A wearable robot is disclosed in, for example, MHD Yamen Saraiji, Tomoya Sasaki, Reo Matsumura, Kouta Minamizawa, and Masahiko Inami, "Fusion: full body surrogacy for collaborative communication," Proceeding SIGGRAPH '18 ACM SIGGRAPH 2018 Emerging Technologies Article No. 7. Furthermore, robots 30 include a vehicle or heavy machinery capable of automated travel or semi-automated travel, a drone, or an aircraft. In addition, robots 30 include a robot which is installed in a sports stadium or the like, which is capable of moving on rails, and which is equipped with a camera. Furthermore, robots 30 include a satellite-type robot which is launched into outer space, which enables attitude control, and which is capable of controlling a direction of photography of a camera. Note that these robots 30 may be equipped with a robot hand or a robot arm capable of grasping an object or attracting an object by suction.

The robot 30 operates based on an instruction from the operator terminal 20a having been successfully authenticated as a user. In this case, user authentication may be performed by known methods and information for the user authentication may be registered in advance.

### (Functional configuration of management server 10)

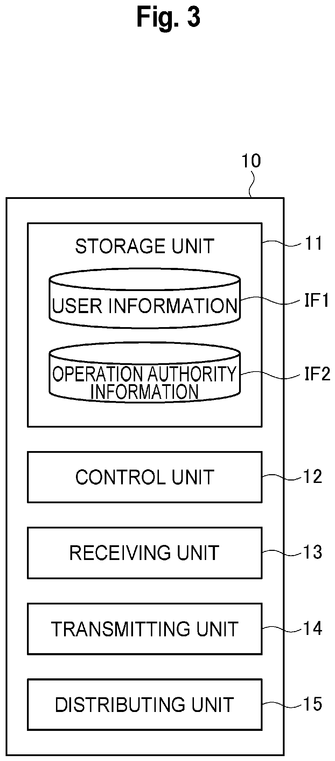

Fig. 3 is a block diagram showing a functional configuration of the management server (server apparatus) 10.

As main functional components, the management server 10 includes a storage unit 11, a control unit 12, a receiving unit 13, a transmitting unit 14, and a distributing unit 15. The functions of the management server 10 are realized as a processor of the management server 10 executes a program stored in the storage unit 11 or the like.

The storage unit 11 stores user information IF1, operation authority information IF2, and the like.

The user information IF1 includes a user ID and a user attribute. The user ID is information for identifying each user (an operator, a viewer, or the like). The user attribute includes information related to an attribute of the user such as a user name, a gender, age, family composition, an address, a contact number, a place of employment, annual income, hobbies, and preferences.

The operation authority information IF2 is information related to an operation authority of the robot 30.

Specifically, in operation authority information IF2, a robot ID for identifying the robot 30 to be an operation object, an operator ID for identifying a user (in other words, an operator) with an operation authority of the robot 30, information defining a range operable by the operator (for example, an operation time or operation contents; hereinafter, an operable range), and the like are registered in association with one another.

Note that the operation authority information IF2 may be fixed information which is set in advance or configured to be optionally settable or changeable by an operator or the like.

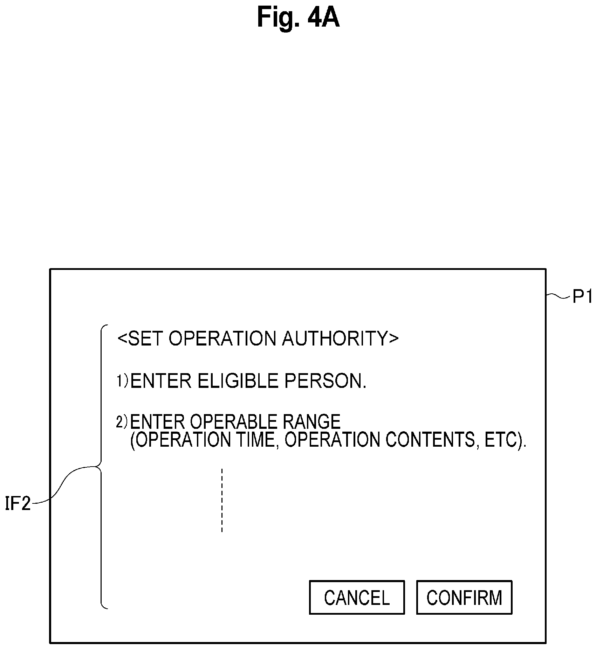

Fig. 4A is a diagram illustrating an operation authority setting screen P1 to be displayed on the operator terminal 20a.

The operator sets new operation authority information IF2 by performing appropriate operations according to displays on the operation authority setting screen P1.

For example, the operator can grant a specific viewer (for example, a viewer having made a donation of a prescribed amount or more) an operation authority that permits the viewer to operate the robot for three minutes. Obviously, an operation authority is not limited thereto and, for example, when granting an operation authority to several viewers, the operation authority may be transferred at several-minute intervals in order to have each viewer experience operating the robot.

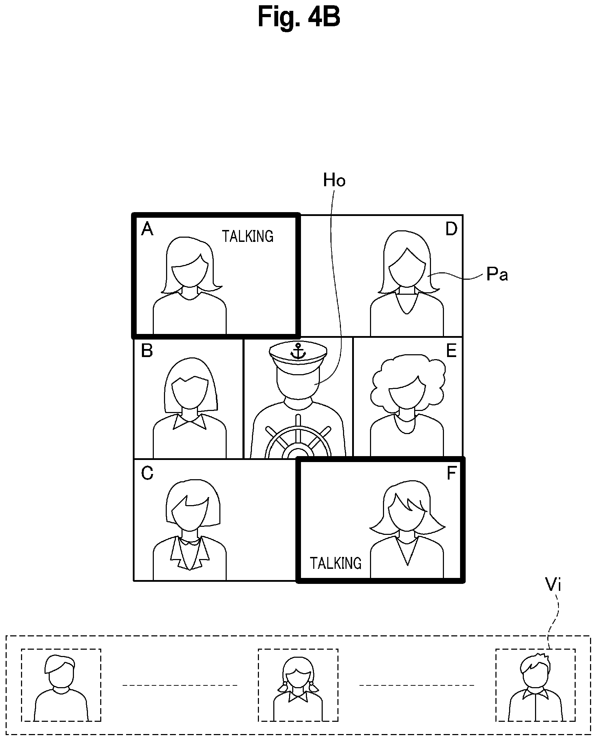

Fig. 4B is an explanatory diagram of a case where an operation authority is granted.

Fig. 4B assumes a case where a user (hereinafter, a host operator) Ho who initially has an operation authority, six users (hereinafter, participants) Pa to whom an operation authority can be granted (delegated), and a user (in other words, a viewer) Vi who is only capable of viewing live-streamed videos are present. The participants Pa may be determined by, for example, an organizer who organizes an online experience (such as an online tour of an aquarium) using the robot 30. The organizer organizes the online experience and sells participation slots. By purchasing a participation slot, a user can participate in the online experience as a participant instead of as a simple viewer. The host operator Ho is capable of engaging in a voice call (refer to A and F shown in Fig. 4B) with each participant Pa and granting an operation authority to each participant Pa during the online experience. For example, the operator Ho can set an operation authority to each participant Pa or manage a set operation authority by using an operation screen P1 such as that shown in Fig. 4A.

Note that a method of determining participants Pa is not limited to the example described above and, for example, participants Pa may be determined by the host operator Ho himself/herself. In addition, the viewer Vi may be allowed to participate in the online experience as a participant Pa when the viewer satisfies prescribed conditions. For example, the viewer Vi having won a random draw or the viewer Vi having accumulated a prescribed number of specific points or more may be allowed to participate in the online experience as a participant Pa.

The control unit 12 controls an acceptance of operation information of the robot 30 in accordance with operation authority information of the robot 30 having been set as described above. Specifically, when the control unit 12 receives operation information of the robot 30 from the operator terminal 20a or the like, the control unit 12 determines whether or not to permit acceptance of the operation information by referring to the operation authority information IF2. For example, when the control unit 12 determines that the operator does not have proper operation authority based on a result of a comparison between the operation information and the operation authority information IF2, the control unit 12 refuses acceptance of the operation information. On the other hand, when the control unit 12 determines that the operator has proper operation authority based on a result of a comparison between the operation information and the operation authority information, the control unit 12 permits acceptance of the operation information.

The receiving unit (first to third receiving units) 13 receives various kinds of data transmitted from the robot 30, the operator terminal 20a, and the viewer terminal 20b.

For example, the receiving unit 13 receives a video (first video) acquired by the robot 30, a video (second video) acquired by the operator terminal 20a, operation information of the robot 30 transmitted from the operator terminal 20a, and the like.

The transmitting unit 14 transmits the operation information of the robot 30 received from the operator terminal 20a to the corresponding robot 30.

The distributing unit 15 live-streams videos received from the robot 30 and the operator terminal 20a to each viewer terminal 20b. The viewer terminal 20b displays live-streamed videos (live videos) on a display apparatus.

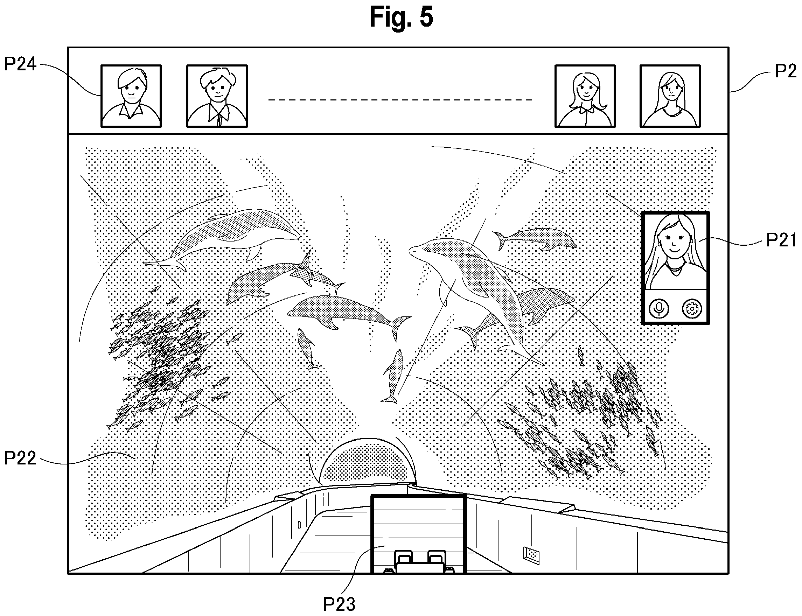

Fig. 5 is a diagram illustrating a screen P2 of live videos that is displayed on the viewer terminal 20b.

As shown in Fig. 5, the live video screen P2 displays a facial video P21 of the operator, a facility video P22 which is acquired by a first camera of the robot 30 and which shows the inside of a facility, a foot video P23 which is acquired by a second camera of the robot 30 and which shows a foot of the robot 30, a facial video P24 of a viewer having made a donation of a prescribed amount or more (or the participant shown in Fig. 4B), and the like.

Note that the live video screen P2 may display, for example, the number of viewers, a comment on a live stream made by each viewer or the like, a reaction (such as "like" or "applause"), a question, acceptance of votes (such as four choices) with respect to a quiz for viewers, and a voting outcome.

Distributing such videos to the viewer terminal 20b in real-time enables each viewer to enjoy live videos in an intensely realistic atmosphere which makes the viewer feel as though he/she is actually inside the facility.

(Physical configurations of management server 10, operator terminal 20a, and viewer terminal 20b)

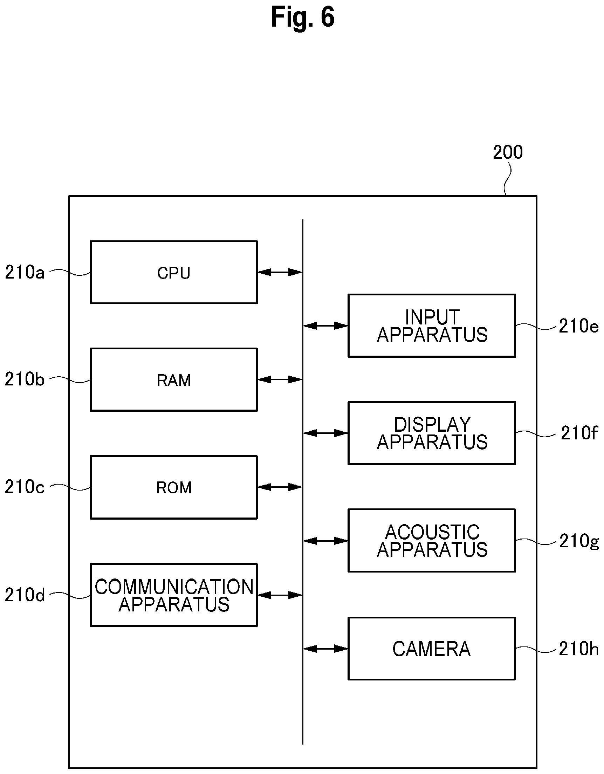

Fig. 6 is a diagram showing a hardware configuration of a computer (information processing apparatus) 200 mounted to the management server 10, the operator terminal 20a, and the viewer terminal 20b.

The computer 200 includes a CPU (Central Processing Unit) 210a which corresponds to a computing unit, a RAM (Random Access Memory) 210b which corresponds to a storage unit, a ROM (Read Only Memory) 210c which corresponds to a storage unit, a communication apparatus 210d, an input apparatus 210e, a display apparatus 210f, an acoustic apparatus 210g, and a camera 210h. These components are connected with one another via a bus so that data can be transmitted and received among one another. While a case where the computer 200 is constituted of one computer will be described in the present example, alternatively, the computer 200 may be implemented by a combination of a plurality of computers. In addition, the configuration shown in Fig. 6 is merely an example and the computer 200 may include other components or need not include a part of these components.

The CPU 210a is a control unit which controls execution of programs stored in the RAM 210b or the ROM 210c and which computes and processes data. The CPU 210a is a computing unit which executes a program for live-streaming a video using the robot 30 and displaying the live-streamed video. The CPU 210a receives various kinds of data from the input apparatus 0e and the communication apparatus 210d, displays a computation result of the data on the display apparatus 210f, outputs audio from the acoustic apparatus 210g, and stores data in the RAM 210b.

The RAM 210b is a part of a storage unit in which data can be rewritten and may be constituted of, for example, a semiconductor storage element. The RAM 210b may store data such as various programs to be executed by the CPU 210a. The data described above are merely an example and the RAM 210b may store data other than the above or need not store part of the data described above.

The ROM 210c is a part of the storage unit from which data can be read out and may be constituted of, for example, a semiconductor storage element. The ROM 210c may store programs and data that are not to be rewritten.

The communication apparatus 210d is an interface which connects the computer 200 to other devices via the communication network N.

The input apparatus 210e accepts input of data and may include a keyboard and a touch panel. In addition, the input apparatus 210e may include a microphone for inputting audio.

The display apparatus 210f is configured to visually display a computation result by the CPU 210a and may be constituted of, for example, an LCD (Liquid Crystal Display). The display apparatus 210f may display a video photographed by a camera of the robot 30, a video photographed by a camera mounted to the computer 200, and the like.

The acoustic apparatus 210g is for outputting audio and may include, for example, an audio decoder and a speaker.

The camera 210h includes an imaging element which captures still images and videos and transmits captured videos to the display apparatus 210f and the robot 30. Note that videos may include still images and audio.

### (Physical configuration of robot 30)

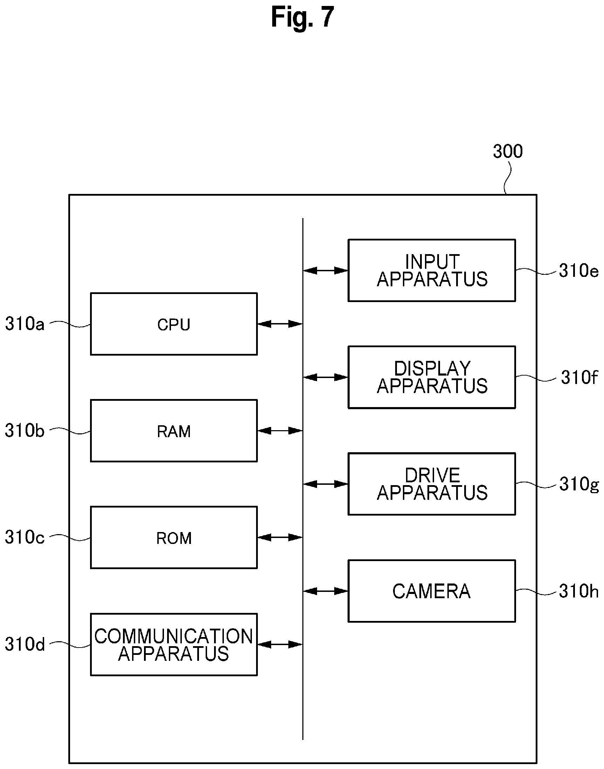

Fig. 7 is a diagram showing a hardware configuration of a computer (information processing apparatus) 300 mounted to the robot 30.

The computer 300 includes a CPU 310a which corresponds to a computing unit, a RAM 310b which corresponds to a storage unit, a ROM 310c which corresponds to a storage unit, a communication apparatus 310d, an input apparatus 310e, a display apparatus 310f, a drive apparatus 310g, and a camera 310h. These components are connected with one another via a bus so that data can be transmitted and received among one another. Note that the configuration shown in Fig. 7 is merely an example and the computer 300 may include other components or need not include a part of these components.

The CPU 310a is a control unit which controls execution of programs stored in the RAM 310b or the ROM 310c and which computes and processes data. The CPU 310a is a computing unit which executes a program for acquiring a video using the robot 30. The CPU 310a receives various kinds of data from the input apparatus 310e and the communication apparatus 310d, displays a computation result of the data on the display apparatus 310f, and stores data in the RAM 310b. In addition, the CPU 310a controls the drive apparatus 310g and controls operations of the robot 30.

The RAM 310b is a part of a storage unit in which data can be rewritten and may be constituted of, for example, a semiconductor storage element. The RAM 310b may store various programs to be executed by the CPU 310a. The data described above are merely an example and the RAM 310b may store data other than the above or need not store part of the data described above.

The ROM 310c is a part of the storage unit from which data can be read out and may be constituted of, for example, a semiconductor storage element. The ROM 310c may store programs and data that are not to be rewritten.

The communication apparatus 310d is an interface which connects the robot 30 to other devices via the communication network N.

The input apparatus 310e accepts input of data and may include a keyboard and a touch panel. In addition, the input apparatus 310e may include a microphone for inputting audio.

The display apparatus 310f is configured to visually display a computation result by the CPU 310a and may be constituted of, for example, an LCD. The display apparatus 310f may display a video photographed by a camera of the robot 30 and the like.

The drive apparatus 310g includes a remotely-operable actuator, a moving unit such as wheels, and a manipulator. When the robot 30 is a mobile robot, the drive apparatus 310g includes at least a moving unit such as wheels and may also include a manipulator. When the robot 30 is a wearable robot, the drive apparatus 310g includes at least a manipulator.

The camera 310h is configured to include a first camera which shows the front of the robot 30 (in other words, the inside of the facility) and a second camera which shows a foot of the robot 30. The camera 310h includes an imaging element which captures still images and videos and transmits captured videos to the display apparatus 310f, the management server 10, and the like. Note that videos may include still images and audio.

The physical configurations of the computers 200 and 300 described above are exemplary and need not necessarily be discrete configurations. For example, the computers 200 and 300 may include an LSI in which the CPU 20a and the RAM 20b or the ROM 20c are integrated.

### < Processing flow >

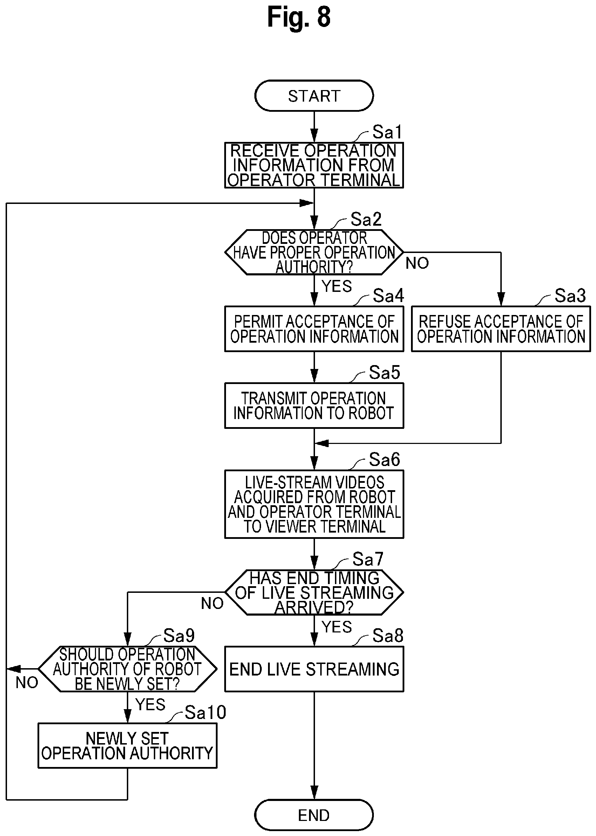

Fig. 8 is a flow chart showing an example of processing executed by the management server 10 according to the present embodiment. As a premise, a case is assumed where an operator has been permitted to remotely operate the robot 30 installed inside a facility by using the operator terminal 20a and a video such as that shown in Fig. 5 is to be live-streamed to the viewer terminal 20b and the like.

In order to live-stream the inside of the facility, the operator operates the operator terminal 20a and starts a remote operation of the robot 30. When the operator terminal 20a accepts the operation by the operator, the operator terminal 20a transmits operation information including an operator ID to the management server 10. When the management server 10 receives the operation information from the operator terminal 20a (step Sa1), the management server 10 determines whether or not the operator has a proper operation authority by referring to the operation authority information IF2 (step Sa2).

When the management server 10 determines that the operator does not have proper operation authority due to, for example, operation contents (such as a grasping operation by a robot hand) described in operation information exceeding a permissible operation range described in operation authority information (No in step Sa2), the management server 10 refuses acceptance of the operation information (step Sa3) and proceeds to step Sa6. In this case, the management server 10 may send back a message to the effect that the operation information cannot be accepted together with a reason why the operation information cannot be accepted to the operator terminal 20a.

On the other hand, when the management server 10 determines that the operator has proper operation authority based on a result of a comparison between the operation information and the operation authority information (Yes in step Sa2), the management server 10 permits acceptance of the operation information (step Sa4). In this case, the management server 10 transmits the accepted operation information to the robot 30 (step Sa5).

When the robot 30 receives the operation information from the management server 10, the robot 30 starts an operation in accordance with the operation information (in this case, a command to the effect that the robot 30 is to perform live streaming of the inside of the facility). Specifically, the robot 30 sequentially transmits a facility video photographed by a camera and the like to the management server 10. In a similar manner, the operator terminal 20a also sequentially transmits a facial video of the operator photographed by a camera and the like to the management server 10.

When the management server 10 receives a facility video acquired by the robot 30, a facial video of the operator acquired by the operator terminal 20a, and the like, the management server 10 live-streams the videos to the viewer terminal 20b (step Sa6).

Subsequently, the management server 10 determines whether or not an end timing of live streaming has arrived (step Sa7). As an example, the management server 10 determines that an end timing of live streaming has arrived when the management server 10 receives an end command of the live streaming from the operator terminal 20a (Yes in step Sa7). In this case, the management server 10 ends the live streaming to the viewer terminal 20b and the like (step Sa8) and ends processing.

On the other hand, when the management server 10 determines that an end timing of live streaming has not arrived (No in step Sa7), the management server 10 proceeds to step Sa9 and determines whether or not to newly set an operation authority of the robot 30. As an example, when the management server 10 receives a setting request of operation authority information from the operator terminal 20a, the management server 10 determines that an operation authority of the robot 30 should be newly set (Yes in step Sa9). In this case, the management server 10 displays the operation authority setting screen P1 (refer to Fig. 4) on the operator terminal 20a and prompts the operation authority information to be set. Note that setting operation authority information includes changing (adding, modifying, or the like) existing operation authority information.

Based on the operation information by the operator, the management server 10 newly sets the operation authority information of the robot 30 (step Sa10) and returns to step Sa2. In addition, based on the changed operation authority information of the robot 30, the management server 10 determines whether or not the operator has proper operation authority. Since subsequent processing has already been described, a description thereof will be omitted.

On the other hand, when the management server 10 determines that the operation authority information of the robot 30 should not be newly set (No in step Sa9), the management server 10 returns to step Sa2 to determine whether not the operator has proper operation authority. Since subsequent processing has already been described, a description thereof will be omitted.

As described above, according to the present embodiment, an operator can use a camera and the like mounted to the robot 30 or the operator terminal 20a to acquire a video showing the inside of a facility and distribute the video to viewers in real-time. On the other hand, by viewing a video distributed in real-time, each viewer can enjoy live videos with an intensely realistic sensation which makes the viewer feel as though he/she is actually inside the facility.

### B. Modifications

Although not particularly mentioned in the present embodiment described above, when a haptic feedback function (a vibrating motor, a resonant actuator, or the like) is mounted to the operator terminal 20a or the viewer terminal 20b, tactile data acquired from the robot 30 may be fed back to the operator terminal 20a or the viewer terminal 20b.

As an example, the robot 30 detects information to be perceived by the tactile sense that a human hand or the like is intrinsically provided with using a tactile sensor or the like mounted to the robot 30. The robot 30 transmits detected information as tactile data to the management server 10. The management server (distributing unit) 10 transmits the tactile data acquired by the robot 30 to the operator terminal 20a or the viewer terminal 20b mounted with a haptic feedback function. According to the configuration described above, an operator, a viewer, or the like can realistically experience a sensation created when the robot 30 comes into contact with an object (for example, a living organism).

In addition, while an aspect in which a same video is distributed to the operator terminal 20a and the viewer terminal 20b has been exemplified in the present embodiment described above, the present invention is not limited thereto. For example, the viewer terminal 20b may be configured to enable the viewer to select (set) a type of video to be distributed in advance.

By operating the viewer terminal 20b, the viewer selects only the facility video P22 acquired by the robot 30 as the video to be distributed (hereinafter, also referred to as a distribution object video). The viewer terminal 20b sends a request for a distribution object video to the management server 10 in accordance with the selection operation. When the management server (distributing unit) 10 receives the request for a distribution object video from the viewer terminal 20b, the management server (distributing unit) 10 processes a video acquired from the robot 30 or the operator terminal 20a based on the received request for a distribution object video and distributes the processed video to the viewer terminal 20b as the distribution object video. According to the configuration described above, the viewer and the like can be provided with videos (contents) that impart a higher degree of satisfaction.

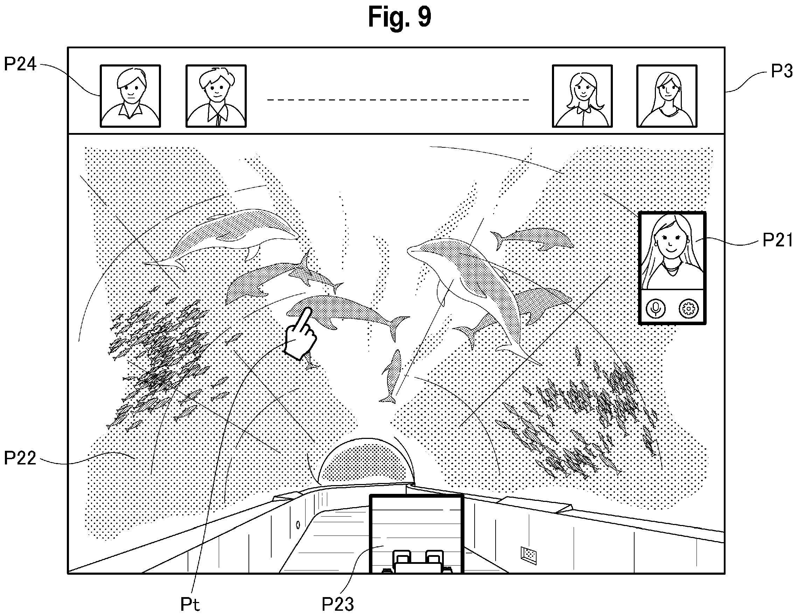

In addition, a configuration may be adopted in which a pointer can be superimposed on an arbitrary location of a video to be distributed to the viewer terminal 20b and the like. The operator specifies a location where the pointer is to be displayed by operating the operator terminal 20a. The operator terminal 20a sends the display operation to the management server 10. When the management server (distributing unit) 10 accepts the display operation from the operator terminal 20a, the management server (distributing unit) 10 generates a video on which the pointer is superimposed (hereinafter, also referred to as a superimposed video) on an arbitrary location of the video and distributes the superimposed video to the viewer terminal 20b and the like. As a result, a display apparatus of the viewer terminal 20b and the like displays a screen P3 of the superimposed video in which a pointer Po has been superimposed at an arbitrary location (refer to Fig. 9).

According to the configuration described above, using the pointer enables the operator to, for example, introduce the behavior of a rare species of animals which is almost never seen to the viewers and the like. Note that a configuration in which comments by the operator and the like can be superimposed in addition to a pointer may also be adopted.

### C. Other

The present embodiment and the modifications described above are intended to facilitate understanding of the present invention and are not intended to restrictively interpret the present invention. The respective elements as well as arrangements, materials, conditions, shapes, sizes, and the like of the elements are not limited to those exemplified above and can be modified as deemed appropriate. In addition, the elements can be partially replaced by or combined with one another.

Furthermore, in the present embodiment and in the modifications, a "unit" or an "apparatus" does not simply imply physical means but also includes cases where a function of the "unit" or the "apparatus" is realized by software. In addition, a function of one "unit" or one "apparatus" may be realized by two or more physical means or apparatuses and functions of two or more "units" or "apparatuses" may be realized by one physical means or apparatus.

### Reference Signs List

- 1: Video distribution system
- 10: Management server
- 11: Storage unit
- 12: Control unit
- 13: Receiving unit
- 14: Transmitting unit
- 15: Distributing unit
- 20a: Operator terminal
- 20b: Viewer terminal
- 30: Robot
- IF1: User information
- IF2: Operation authority information

## Claims

1. A video distribution system, comprising:
a first receiving unit which receives a first video acquired by a robot;
a second receiving unit which receives operation information of the robot from a terminal of an operator;
a third receiving unit which receives a second video acquired by the terminal of the operator;
a transmitting unit which transmits the operation information of the robot to the robot; and
a distributing unit which distributes the first video and the second video to a terminal of a viewer.

2. The video distribution system according to claim 1, further comprising a control unit which controls, based on operation authority information which defines an operation authority with respect to the robot, acceptance of operation information of the robot.

3. The video distribution system according to claim 2, wherein when the control unit accepts a setting operation for the operation authority information by the operator, the control unit sets new operation authority information in accordance with the setting operation and determines whether or not to permit acceptance of operation information of the robot, based on the set new operation authority information.

4. The video distribution system according to any one of claims 1 to 3, wherein when a display operation of a pointer by the operator is accepted, the distributing unit generates a superimposed video in which the pointer is superimposed on the first video in accordance with the display operation and distributes the superimposed video to the terminal of the viewer.

5. The video distribution system according to any one of claims 1 to 3, wherein when a request for a distribution object video is accepted from the viewer, the distributing unit processes the first video and the second video, based on the request and distributes processed videos to the terminal of the viewer.

6. The video distribution system according to any one of claims 1 to 3, wherein the terminal of the viewer is equipped with a haptic feedback function, and the distributing unit transmits tactile data acquired by the robot to the terminal of the viewer.

7. A server apparatus, comprising:
a first receiving unit which receives a first video acquired by a robot;
a second receiving unit which receives operation information of the robot from a terminal of an operator;
a third receiving unit which receives a second video acquired by the terminal of the operator;
a transmitting unit which transmits the operation information of the robot to the robot; and
a distributing unit which distributes the first video and the second video to a terminal of a viewer.

8. A program for causing a computer to function as:
a first receiving unit which receives a first video acquired by a robot;
a second receiving unit which receives operation information of the robot from a terminal of an operator;
a third receiving unit which receives a second video acquired by the terminal of the operator;
a transmitting unit which transmits the operation information of the robot to the robot; and
a distributing unit which distributes the first video and the second video to a terminal of a viewer.
